# EUROPÄISCHE PATENTSCHRIFT

(11) **EP 3 446 907 B1**
(45) Veröffentlichungstag und Bekanntmachung des Hinweises auf die Patenterteilung: **15.03.2023**
(21) Anmeldenummer: 18199565.5
(22) Anmeldetag: 05.05.2011
(51) Int. Cl.: B60K 6/48, B60K 6/547, F16H 3/091, F16H 3/12, B60K 6/442, F16H 3/00

(54) **HYBRIDANTRIEB MIT EINEM AUTOMATISIERTEN SCHALTGETRIEBE**
HYBRID DRIVE HAVING AN AUTOMATIC GEARBOX
ENTRAÎNEMENT HYBRIDE DOTÉ D'UNE BOÎTE DE VITESSES AUTOMATISÉ

(30) Priorität: 28.06.2010 DE 102010030573
(43) Veröffentlichungstag der Anmeldung: 27.02.2019
(62) Teilanmeldung aus: 16165485.0
(73) Patentinhaber: ZF Friedrichshafen AG, 88046 Friedrichshafen (DE)
(72) Erfinder: KALTENBACH, Johannes, 88048 Friedrichshafen (DE)
(74) Vertreter: ZF Friedrichshafen AG

(56) Entgegenhaltungen:
- WO-A1-2010/070707
- JP-A- 2010 076 680
- US-A1- 2010 120 580

## Beschreibung

Die Erfindung betrifft einen Hybridantrieb mit einem automatisierten Schaltgetriebe gemäß dem Oberbegriff des Patentanspruchs 1.

Fahrzeuge werden zunehmend mit Hybridantrieben, d.h. mit zwei oder mehr verschiedenen Antriebsquellen ausgestattet. Solche Antriebe können insbesondere im Straßenverkehr zur Verminderung des Kraftstoffverbrauchs und der Schadstoffemissionen beitragen. Ziel der Entwicklung sind Hybrid-Antriebsstränge, die möglichst kompakt bauend, bei möglichst geringer Kompliziertheit und bei geringem Kosten- und Konstruktionsaufwand in Fahrzeuge implementiert werden können. Dabei haben sich weitgehend Antriebsstränge mit einem Verbrennungsmotor und einem oder mehreren Elektromotoren als Parallelhybrid oder als Mischhybrid durchgesetzt, da sie durch eine im Kraftfluss im Wesentlichen parallele Anordnung des Verbrennungsmotors und des Elektroantriebs sowohl eine Überlagerung der Antriebsmomente als auch eine Ansteuerung mit rein verbrennungsmotorischem Antrieb oder rein elektromotorischem Antrieb ermöglichen. Da sich die Antriebsmomente des Elektroantriebs und des Verbrennungsmotors je nach Ansteuerung addieren können, ist eine vergleichsweise kleinere Auslegung des Verbrennungsmotors und/oder dessen zeitweise Abschaltung möglich, wodurch eine signifikante Reduzierung der CO₂-Emissionen ohne nennenswerte Leistungs- bzw. Komforteinbußen erreicht werden kann. Die Möglichkeiten und Vorteile eines Elektroantriebes können somit mit den Reichweiten-, Leistungs- und Kostenvorteilen von Brennkraftmaschinen verbunden werden.

Als weitere Hybridantriebe sind Serienhybride zu erwähnen, bei denen ein Verbrennungsmotor als Antrieb für einen Generator dient, welcher eine elektromotorische Maschine speist, so dass der Verbrennungsmotor von den Antriebsrädern entkoppelt ist und daher ständig in einem einzigen, emissionsgünstigen Betriebspunkt betrieben werden kann. Hierbei ist jedoch der Wirkungsgrad des Antriebs aufgrund der mechanisch-elektrischen Mehrfachumwandlung verringert und die vielfältigen Steuerungsmöglichkeiten eines Parallelhybrides oder einer Mischform sind nicht gegeben.

Um einen möglichst effektiven Betrieb des Hybridantriebs zu erreichen, werden Antriebsstrategien eingesetzt, die den Elektroantrieb situationsbedingt flexibel einsetzen, beispielsweise zum Anfahren, als alleinige Antriebsquelle im städtischen Kurzstreckenverkehr oder in einem Stop-and-Go-Betrieb, als zusätzliche Antriebsquelle bei erhöhten Leistungsanforderungen in einem Boostbetrieb, als Startergenerator zum schnellen Starten des Verbrennungsmotors sowie als Generator zur Stromerzeugung oder zur Energierückgewinnung in einem Rekuperationsbetrieb. Der Verbrennungsmotor soll hingegen zumindest überwiegend in verbrauchs-, drehmoment- und drehzahlgünstigen Betriebspunkten bei hohem Wirkungsgrad betrieben werden.

Grundsätzlich können Hybridantriebe mit allen gängigen Formen von Fahrzeuggetrieben zur Bildung von Antriebsübersetzungen kombiniert werden. Als besonders vorteilhaft haben sich hinsichtlich des Wirkungsgrades, der Wirtschaftlichkeit und des Fahrkomforts parallele Hybridanordnungen mit einem Verbrennungsmotor und einem Elektroantrieb in Verbindung mit einem automatisierten Schaltgetriebe, kurz als AMT-Hybrid bezeichnet, erwiesen.

Der Elektroantrieb in einem solchen Antriebsstrang kann auf verschiedene Weise in den Kraftfluss integriert werden. In einer gängigen Bauweise ist eine Elektromaschine am Getriebeeingang angeordnet. Dabei wird zwischen einer Ein-Kupplungsanordnung (1K) und einer Zwei-Kupplungsanordnung (2K), oder sofern eine integrierte Startergenerator-Funktion (ISG) der Elektromaschine vorgesehen ist, zwischen einer 1K-ISG-Anordnung und einer 2K-ISG-Anordnung unterschieden.

Bei einer 2K-ISG-Anordnung ist beispielsweise die Elektromaschine direkt auf einer Getriebeeingangswelle angeordnet, welche über eine erste Kupplung, die als eine reibschlüssige oder gegebenenfalls als eine formschlüssige Trennkupplung ausgebildet sein kann, mit dem Verbrennungsmotor verbindbar ist. Die Elektromaschine ist über eine separate zweite Kupplung mit einem Schaltgetriebe koppelbar. Zwischen der zweiten Kupplung und dem Getriebe kann auch eine zusätzliche zweite elektrische Maschine angeordnet sein. Bei einer 1K-ISG-Anordnung ist lediglich eine Kupplung zwischen einem Verbrennungsmotor und einer Elektromaschine vorgesehen.

Eine zweite separate Kupplung entfällt oder deren Funktion wird gegebenenfalls von einer getriebeinternen Schaltkupplung übernommen.

Anstelle einer direkten Anordnung zwischen dem Verbrennungsmotor und dem Fahrzeuggetriebe kann die Elektromaschine auch über eine Getriebestufe oder ein Planetengetriebe mit dem Getriebeeingang antriebsverbunden sein. Dadurch kann die Elektromaschine insbesondere als ein elektrodynamisches Anfahrelement (EDA) eingesetzt werden, wodurch eine herkömmliche Anfahrkupplung entfallen kann. Bei anderen Antriebssträngen ist der Elektroantrieb hingegen am Getriebeabtrieb oder bei Achshybriden direkt an einer Fahrzeugachse angeordnet. 1K-ISG und 2K-ISG-Hybridkonzepte mit getriebeeingangsseitigen oder getriebeausgangsseitigen elektrischen Maschinen und Achshybride haben sich bereits in der Praxis bewährt.

Allerdings haben Hybridantriebe, bei denen der Elektroantrieb am Getriebeeingang oder am Getriebeabtrieb permanent antriebsverbunden, d.h. in den Kraftfluss des Antriebsstrangs integriert ist, den Nachteil, dass unnötige Nulllastverluste über die Elektromaschine entstehen können. Zudem sind die Ansteuerungsmöglichkeiten, je nach Anordnung des Elektroantriebs und Antriebsstrangkonfiguration unterschiedlich und begrenzt. Insbesondere erlauben Hybridkonzepte mit einem Elektroantrieb, der mit einem Getriebeeingang einer konventionellen Getriebestruktur antriebsverbunden ist, keine Zugkraftunterstützung während der Schaltung von verbrennungsmotorisch angetriebenen Gängen.

Bei Hybridkonzepten mit einem Elektroantrieb, der mit einem Getriebeabtrieb oder einem direkten Achsantrieb antriebsverbunden ist, ist hingegen der Start des Verbrennungsmotors und das Betreiben der Elektromaschine im Fahrzeugstillstand sowie die Nutzung verschiedener Getriebeübersetzungen durch den Elektroantrieb nicht möglich.

Demgegenüber werden Hybridanordnungen angestrebt, bei denen ein Elektroantrieb zumindest für einzelne Übersetzungsstufen vollständig vom Kraftfluss abgekoppelt bzw. wahlweise angekoppelt werden kann. Diese Hybridanordnungen haben grundsätzlich das Potenzial für eine größere Variabilität bei der Konzeption eines Radsatzes insbesondere für einen AMT-Hybrid, da konstruktive Einschränkungen aufgrund einer mechanischen Verbindung zwischen Verbrennungsmotor und Elektroantrieb zumindest vermindert werden können.

Ein derartiges Getriebekonzept hat beispielsweise bei so genannten Plug-in Hybrid-Fahrzeugen oder bei so genannten mechanisch erweiterten Rangeextender-Elektrofahrzeugen, das sind Fahrzeuge, bei denen der Elektroantrieb so ausgelegt ist, dass er zumindest für einen Kurzstreckenbetrieb, beispielsweise im Stadtverkehr, alleine genügend Fahrleistung zur Verfügung stellt, verschiedene Vorteile.

Zum einen ist bei verbrennungsmotorischen Schaltvorgängen, d.h. bei Gangwechseln, während welcher der Verbrennungsmotor die Antriebsquelle des Fahrzeuges ist, eine weitgehende Zugkrafterhaltung mit Hilfe des Elektroantriebs möglich. Umgekehrt kann die Zugkraft bei einem Gangwechsel des Elektroantriebs mit Hilfe des Verbrennungsmotors aufrechterhalten werden, sofern der Verbrennungsmotor aktuell nicht abgeschaltet ist. Zum anderen sind die Schaltpunkte bei elektrischen Schaltungen aufgrund des im Vergleich zum Verbrennungsmotor meist zur Verfügung stehenden größeren Drehzahlbandes bei gutem Wirkungsgrad grundsätzlich sehr variabel wählbar. Die erzielbaren Schaltzeiten erlauben zudem die Verwendung einer relativ kostengünstigen Schaltaktuatorik.

Die Schaltvorgänge können durch den Verbrennungsmotor über eine gegebenenfalls zwischen dem Verbrennungsmotor und dem Getriebeeingang wirksamen Reibungskupplung synchronisiert werden, so dass zumindest teilweise Synchronisierungen durch kostengünstigere Klauenkupplungen ersetzt werden können. Andererseits kann eine gegebenenfalls vorhandene Anfahrkupplung geschont werden, indem die Elektromaschine als Anfahrelement dient. Da eine Elektromaschine grundsätzlich in beiden Drehrichtungen angesteuert werden kann, ist durch eine Drehrichtungsumkehr ein Verzicht auf einen separaten Rückwärtsgangradsatz möglich. Zudem können die Stufensprünge der verbrennungsmotorischen Gänge in einem solchen Hybridsystem vergleichsweise groß gewählt werden, wodurch für die Realisierung einer vorgegebenen Gesamtspreizung eine relativ geringe Anzahl von Gängen genügt. Dadurch können Kosten, Bauraum und Gewicht eingespart werden.

Die WO 2008/138387 A1 zeigt einen solchen AMT-Hybrid mit verbrennungsmotorisch angetriebenen Gängen und mit elektromotorisch angetriebenen Gängen. Zugkraftunterbrechungsfreie Schaltvorgänge sowie eine Funktionsvielfalt des Elektroantriebs werden bei dem bekannten Hybridantriebssystem mit Hilfe zweier Teilgetriebe realisiert. Die Getriebestruktur umfasst im Wesentlichen in achsparalleler Anordnung zwei Teilantriebsstränge mit jeweils einer Antriebswelle sowie einen dazwischen angeordneten Abtriebsstrang mit einer Abtriebswelle, wobei in mehreren Radsatzebenen auf den Wellen je Ebene zwei Losräder, denen jeweils eine Gangkupplung zugeordnet ist, und ein Festrad angeordnet sind.

Die WO 2010/070707 A1 schlägt weiterhin eine leichtgewichtige und kompakte Kraftübertragungsvorrichtung für ein Hybridfahrzeug vor, wodurch eine Konfiguration einer Geschwindigkeitsschalteinrichtung, die eine Vielzahl von Gängen realisiert, vereinfacht werden kann und ein Elektromotor kompakt gemacht werden kann. Weiterhin sind eine erste Gangschalteinrichtung zum Realisieren einer Vielzahl von Gängen mit einer ersten Eingangswelle, die mit einer Antriebswelle eines Verbrennungsmotors verbunden ist, und eine zweite Gangschalteinrichtung zum Realisieren einer Vielzahl von Gängen vorgesehen, die sich von denen des ersten Gangschaltmittels unterscheiden, mit einer zweiten Eingangswelle, die mit einer Antriebswelle eines Elektromotors verbunden ist. Ein Verbindungsmittel zum trennbaren Verbinden der ersten Eingangswelle und der zweiten Eingangswelle ist ebenfalls vorgesehen.

Ferner widmet sich die JP 2010 076680 A der Problemstellung, eine Hybridantriebsvorrichtung bereitzustellen, die in der Lage ist, unterschiedliche Übersetzungsverhältnisse zwischen einem Verhältnis einer rotierenden elektrischen Maschine zu einem Ausgangselement und einem Verhältnis eines Motors zu dem Ausgangselement einzustellen. Die Hybridantriebsvorrichtung soll auch in der Lage sein, die Drehzahlen jeweils durch den Antrieb der rotierenden elektrischen Maschine und des Motors bei jeweils optimalen Übersetzungsverhältnissen und Übertragung der geänderten Drehzahlen auf das Ausgangselement zu übertragen.

Die Teilantriebsstränge bilden zusammen mit dem Abtriebsstrang jeweils ein Teilgetriebe mit Gangschaltzahnradpaaren, wobei das jeweilige auf der Abtriebswelle angeordnete Zahnrad zum einen mit einem Zahnrad auf der ersten Antriebswelle und zum anderen mit einem Zahnrad auf der zweiten Antriebswelle kämmt, also wahlweise, je nach geschalteter Gangkupplung, an einer Übersetzung des ersten Teilgetriebes oder des zweiten Teilgetriebes partizipiert.

Das erste Teilgetriebe ist über eine Reibungskupplung mit einem Verbrennungsmotor verbindbar, das zweite Teilgetriebe ist mit einer Elektromaschine permanent antriebsverbunden. Ein Wechsel der Kopplung zwischen der ersten und der zweiten Antriebswelle mit der Abtriebswelle erfolgt durch Schalten von Gangschaltzahnradpaaren, wobei einige der Gänge durch Schalten eines einzelnen Zahnradpaares im Kraftfluss von einer der Antriebswellen auf die Abtriebswelle und andere Gänge durch Hintereinanderschalten zweier oder mehr Zahnradpaare im Wechsel von der einen Antriebswelle über die andere Antriebswelle auf die Abtriebswelle darstellbar sind.

Die US 2010/120580 A1 gibt ein Hybridgetriebe für ein Fahrzeug an, wobei das Getriebe eine Eingangs- und eine zu dieser koaxiale Ausgangswelle sowie eine erste und eine zweite Vorgelegewelle, die parallel zu der Eingangswelle sind, aufweist. Ein erster und ein zweiter Radsatz verbinden die Eingangswelle und die erste Vorgelegewelle, ein dritter und ein vierter Radsatz verbinden die erste Vorgelegewelle mit der Ausgangswelle, ein fünfter und sechster Radsatz verbinden die zweite Vorgelegewelle mit der Ausgangswelle. Jeder Radsatz weist eine Eingangs- und ein Ausgangsrad auf, die miteinander kämmen. Eine Drehmomentübertragung erfolgt von dem Eingangsrad auf das Ausgangsrad. Das Getriebe weist zudem fünf Synchron-Schaltelemente auf. Eine erste und eine zweite elektrische Maschine sind benachbart zueinander in dem Getriebegehäuse angeordnet.

Die erste elektrische Maschine weist einen Rotor auf, der mit der Eingangswelle verbunden und mit dem ersten Radsatz über dessen Eingangsrad mittels einer untergeordneten Welle gekoppelt ist. Die zweite elektrische Maschine weist ebenfalls einen Rotor auf, der mit der Eingangswelle verbunden und mittels eines siebten und eines achten Radsatzes mit jeder der Vorgelegewellen verbunden ist. Das Getriebe kann wenigstens fünf verschiedene Gänge darstellen, die entweder rein elektrisch oder rein mechanisch oder in seriellem Hybrid betrieb oder in parallelem Hybridbetrieb dargestellt werden können.

Außerdem offenbart die DE 101 33 695 A1 einen AMT-Hybrid mit zwei Eingangswellen und zwei eingangsseitigen Kupplungen, vorzugsweise in Doppelkupplungsbauweise. Die beiden Eingangswellen bilden mit darauf angeordneten Los- und Festrädern sowie zugeordneten Schaltvorrichtungen jeweils ein Teilgetriebe. Die beiden Teilgetriebe sind entweder achsparallel mit jeweils einer Ausgangswelle oder einem achsparallelen Abtrieb ausgebildet, oder sie sind ineinander verschachtelt angeordnet, wobei die beiden Eingangswellen in üblicher Doppelkupplungsbauweise koaxial zueinander und eine Ausgangswelle axial dahinter angeordnet ist. Eine Elektromaschine greift an einem der beiden Teilgetriebe an.

Diese Elektromaschine kann getriebeausgangsseitig, d.h. an dem einer Antriebseinheit, beispielsweise einem Verbrennungsmotor, gegenüberliegenden Ende einer Getriebeeingangswelle angeordnet sein, wobei die Getriebeeingangswelle über die zugehörige eingangsseitige Kupplung mit einer Antriebswelle der Antriebseinheit wirkverbindbar ist. Insbesondere kann die Elektromaschine drehbar auf einer Getriebeausgangswelle angeordnet sein und mit einer der Getriebeeingangswellen über eine Zahnradstufe wirkverbunden sein. Die Elektromaschine kann alternativ dazu auch achsparallel zu einer der Getriebeeingangswellen angeordnet und über einen Zugmitteltrieb oder eine Zahnradstufe mit einer der Getriebeeingangswelle wirkverbunden sein.

Des Weiteren sind in der DE 199 60 621 B4 verschiedene Ausführungsformen eines Hybridantriebs beschrieben, bei dem zwei achsparallel oder koaxial zueinander angeordnete Vorgelegewellen jeweils über mehrere schaltbare Gangradsätze mit unterschiedlicher Übersetzung selektiv mit einer gemeinsamen Ausgangswelle in Triebverbindung bringbar sind. Die erste Vorgelegewelle steht über eine erste Eingangskonstante mit einer Eingangswelle in Triebverbindung, die über eine steuerbare Reibungskupplung mit der Triebwelle eines Verbrennungsmotors verbindbar ist. Die zweite Vorgelegewelle ist entweder unmittelbar drehfest mit dem Rotor einer Elektromaschine verbunden oder steht über eine zweite Eingangskonstante mit dem Rotor der Elektromaschine in Triebverbindung. Zudem ist jeweils eine ein- und ausrückbare Schaltkupplung vorgesehen, über welche die zweite Vorgelegewelle über die zweite Eingangskonstante mit der Eingangswelle in Triebverbindung bringbar oder der Rotor der Elektromaschine mit der Eingangswelle koppelbar ist. Bei eingerückter Schaltkupplung stehen somit auch die beiden Vorgelegewellen über die beiden Eingangskonstanten miteinander in Triebverbindung.

Die bekannten Hybridantriebe besitzen zwar einen oder mehrere der eingangs genannten Vorteile der Antriebskonfigurationen mit einem abkoppelbaren Elektroantrieb, die Variationsmöglichkeiten der darin gezeigten Teilgetriebe bei der Konzeption eines Radsatzes sind jedoch eher begrenzt oder zumindest sind die Getriebestrukturen in Teilen relativ konstruktions- und kostenaufwendig oder nicht ohne weiteres an eine gewünschte Gesamtspreizung und Gangzahl anpassbar.

Vor diesem Hintergrund liegt der Erfindung die Aufgabe zugrunde, ein Hybridantrieb mit einem automatisierten Schaltgetriebe vorzuschlagen, der die eingangs genannten Vorteile besitzt bzw. Nachteile vermeidet. Dieser Antrieb soll vor allem eine große Variabilität hinsichtlich eines Radsatzkonzeptes sowie der Verteilung und der Anzahl elektrischer sowie verbrennungsmotorischer Gänge aufweisen und dennoch im Konstruktions- und Kostenaufwand günstig sowie im Betrieb effizient und komfortabel sein.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass zur Bildung eines Hybridantriebsstranges mit einem automatisierten Schaltgetriebe eine Elektromaschine schaltbar an einem Getriebeeingang angeordnet werden kann, so dass ein nachgeordneter Radsatz des Getriebes, abgesehen von einer Ankoppeleinrichtung, weitgehend frei konzipierbar und die Elektromaschine multifunktional ansteuerbar ist. Hierbei ist es von Bedeutung, wenn mit einer Getriebeschaltvorrichtungen zwei Getriebeeingangswellen drehfest miteinander koppelbar sind, dass eine von denen von einem Verbrennungsmotor und die andere von der Elektromaschine antreibbar ist. Die gleiche Getriebeschaltvorrichtung dient in einer anderen Schaltstellung vorteilhaft dem Schalten eines Getriebeganges.

Durch eine Anordnung gemäß Anspruch 1 wird mit relativ geringem Kosten- und Konstruktionsaufwand eine hohe Variabilität bei der Konzeptionierung eines AMT-Hybridantriebs hinsichtlich eines vorgesehenen Einsatzbereiches eines damit ausgestatteten Fahrzeuges ermöglicht, wobei wahlweise verbrennungsmotorische, elektrische und verbrennungsmotorisch-elektrisch gekoppelte Antriebsmomentübertragungen zur Verfügung stehen.

Zur weiteren Verdeutlichung der Erfindung sind der Beschreibung Zeichnungen mit mehreren exemplarischen Ausführungsbeispielen zur besseren Erläuterung beigefügt. In diesen zeigen:
- Fig. 1: eine beispielhafte Hybridantrieb-Struktur mit automatisiertem Schaltgetriebe, mit einem Verbrennungsmotor und einer ersten elektrischen Maschine, mit koaxialem An- und Abtrieb, mit sechs Vorwärtsgängen und einem Rückwärtsgang, und mit auf einer Antriebs- und Abtriebsebene sowie auf einer Vorgelegewellen-Ebene ungleichmäßig verteilt angeordneten Gangschaltvorrichtungen,
- Fig. 2: eine Gangtabelle der beispielhaften Hybridantrieb-Struktur nach Fig. 1 mit einer Gangfolge sowie einer beispielhaften Übersetzungsreihe und Stufung,
- Fig. 3: eine weitere beispielhafte Hybridantrieb-Struktur mit automatisiertem Schaltgetriebe, mit ausschließlich auf einer Antriebs- und Abtriebsebene angeordneten Gangschaltvorrichtungen,
- Fig. 4: eine weitere beispielhafte Hybridantrieb-Struktur mit automatisiertem Schaltgetriebe, mit auf einer Antriebs- und Abtriebsebene sowie auf einer Vorgelegewellen-Ebene gleichmäßig verteilt angeordneten Gangschaltvorrichtungen,
- Fig. 5: eine weitere beispielhafte vierte Hybridantrieb-Struktur mit automatisiertem Schaltgetriebe, mit einem koaxialen Antrieb und Abtrieb mit fünf Vorwärtsgängen sowie ohne Rückwärtsgang,
- Fig. 6: eine weitere beispielhafte Hybridantrieb-Struktur mit automatisiertem Schaltgetriebe, mit einem achsversetzten Antrieb und Abtrieb mit fünf Vorwärtsgängen sowie ohne Rückwärtsgang,
- Fig. 7: eine beispielhafte schematische Darstellung einer Schalttopologie der Hybridantrieb-Struktur nach Fig. 6,
- Fig. 8: eine weitere beispielhafte Gangtabelle der Hybridantrieb-Struktur nach Fig. 6 und Fig. 7 mit einer Gangfolge,
- Fig. 9: eine weitere beispielhafte Hybridantrieb-Struktur mit automatisiertem Schaltgetriebe, mit gegenüberliegend angeordneten Verbrennungsmotor und Elektromaschine,
- Fig. 10: eine weitere beispielhafte Hybridantrieb-Struktur mit automatisiertem Schaltgetriebe, mit einer gegenüber der Hybridantrieb-Struktur von Fig. 6 veränderten Gangfolge,
- Fig. 11: eine weitere beispielhafte Gangtabelle der Hybridantrieb-Struktur von Fig. 10 mit der Gangfolge,
- Fig. 12: eine weitere beispielhafte Hybridantrieb-Struktur mit automatisiertem Schaltgetriebe, mit achsversetztem Antrieb und Abtrieb mit drei Vorwärtsgängen sowie ohne Rückwärtsgang und ohne Anfahrkupplung,
- Fig. 13: eine weitere beispielhafte Gangtabelle der Hybridantrieb-Struktur gemäß Fig. 12 mit einer Gangfolge,
- Fig. 14: eine erfindungsgemäße Hybridantrieb-Struktur mit automatisiertem Schaltgetriebe, mit einer mit einem Verbrennungsmotor in Serie geschalteten, hintereinander angeordneten zweiten elektrischen Maschine,
- Fig. 15: eine Gangtabelle der Hybridantrieb-Struktur nach Fig. 14 mit einer Gangfolge,
- Fig. 16: eine weitere erfindungsgemäße Hybridantrieb-Struktur mit automatisiertem Schaltgetriebe, mit einer dem Verbrennungsmotor gegenüberliegend angeordneten zweiten elektrischen Maschine,
- Fig. 17: eine weitere beispielhafte Hybridantrieb-Struktur mit automatisiertem Schaltgetriebe, mit einer gegenüber einer ersten elektrischen Maschine angeordneten zweiten elektrischen Maschine, und
- Fig. 18: eine weitere beispielhafte Hybridantrieb-Struktur mit automatisiertem Schaltgetriebe, bei dem die beiden Getriebeeingangswellen koaxial sowie axial hintereinander angeordnet sind.

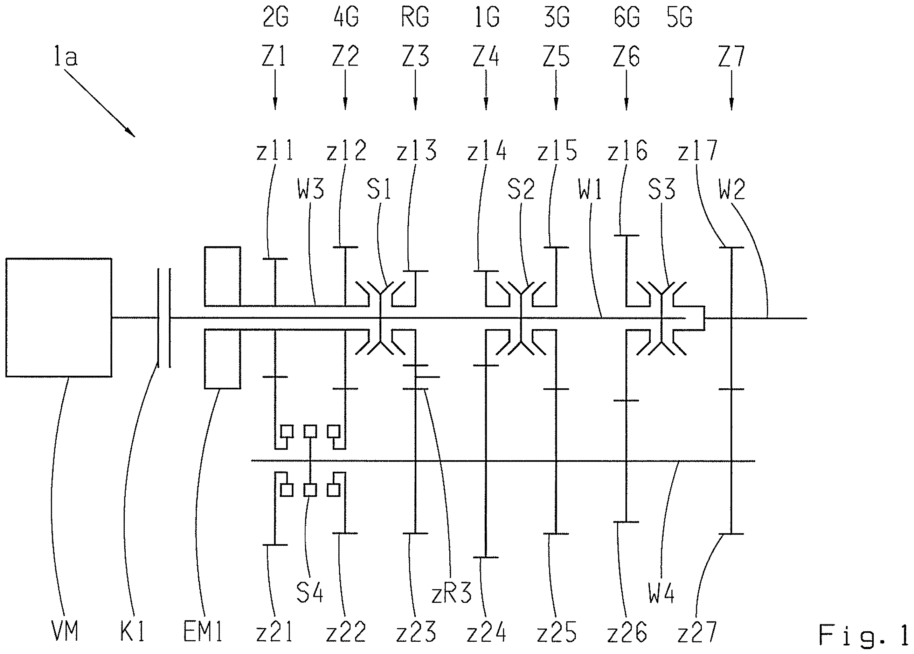

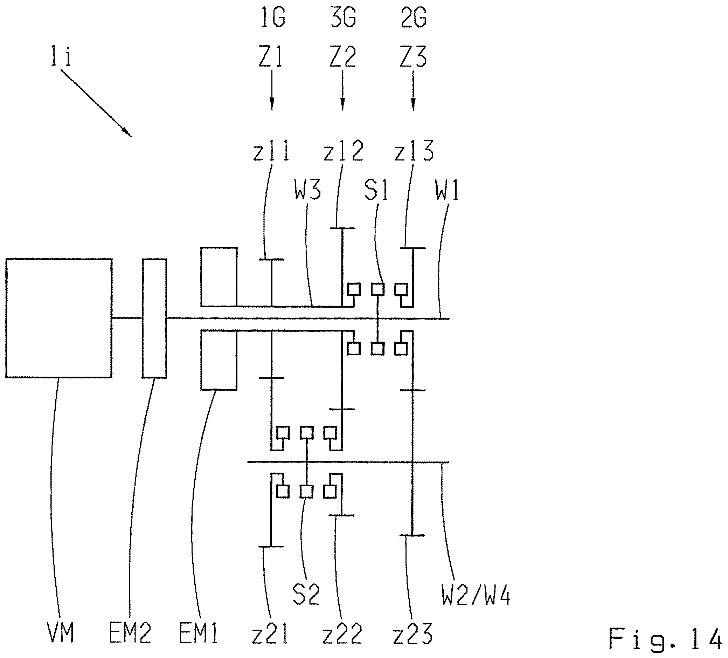

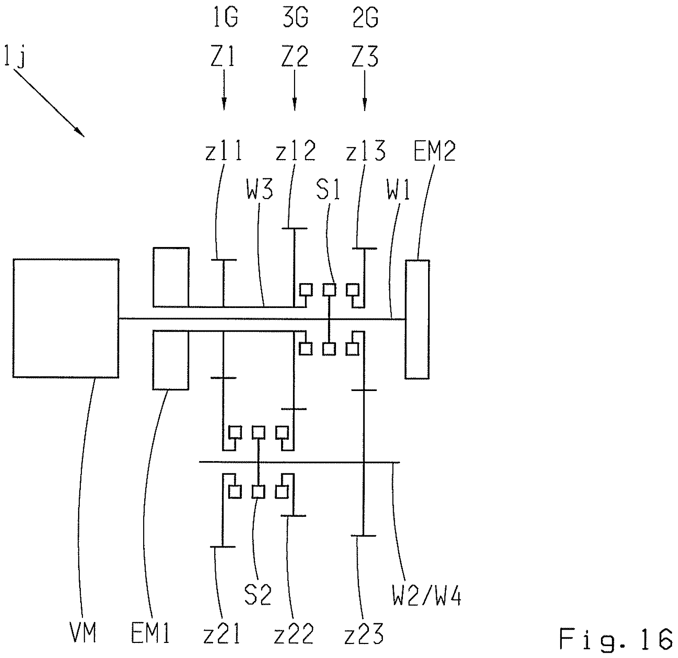

Die Figuren 1, 3, 4, 5, 6, 9, 10, 12, 14, 16, 17 und 18 zeigen demnach zwölf Hybrid-antrieb-Strukturen 1a - 1l mit jeweils einem automatisierten Schaltgetriebe (AMT-Hybrid), bei denen die beiden Getriebeeingangswellen mittels einer Gangschaltvorrichtung antriebswirksam miteinander verbindbar sind, und bei denen mit der gleichen Gangschaltvorrichtung in einer zweiten Schaltstellung ein Getriebegang schaltbar ist. Bis auf das Ausführungsbeispiel gemäß Fig. 14 und das Ausführungsbeispiel gemäß Fig. 16 sind die Ausführungsbeispiele nicht Teil dieser Erfindung und dienen lediglich der Erläuterung.

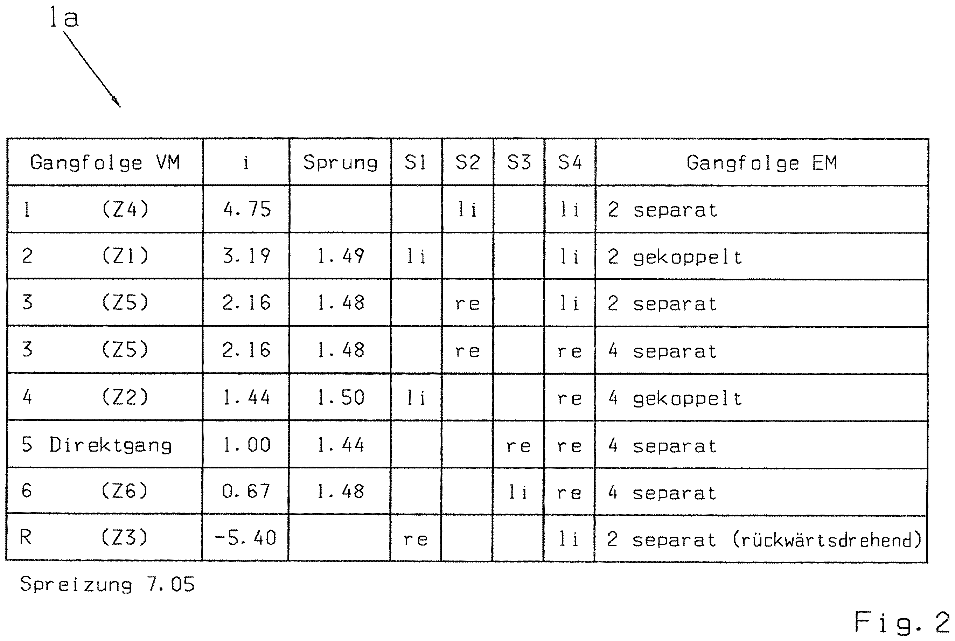

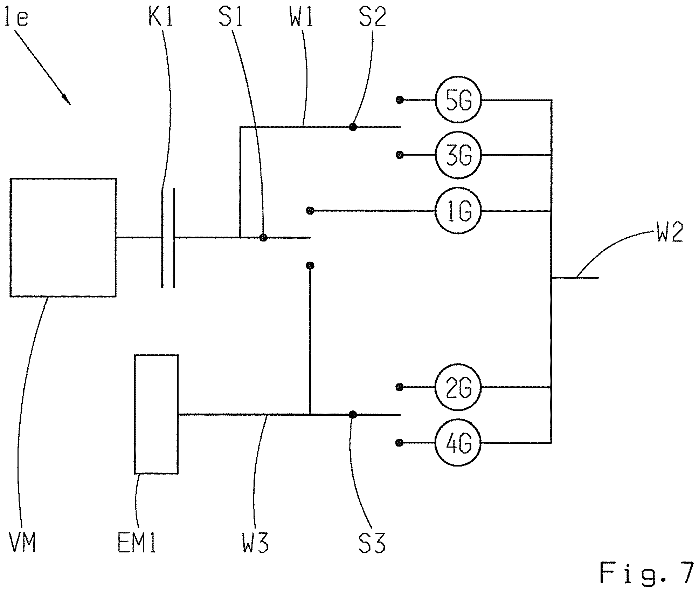

Die Figuren 2, 8, 11, 13, 15 zeigen zugehörige beispielhafte Gangtabellen. Fig. 7 zeigt eine beispielhafte allen Hybridantrieb-Strukturen 1a - 1l zugrunde liegende Schaltopologie. Zur Vereinfachung sind in den Figuren für vergleichbare Bauteile gleiche Bezugszeichen verwendet.

Demnach umfasst eine in Fig. 1 gezeigte beispielhafte Hybridantrieb-Struktur 1a sieben Radsatzebenen Z1 - Z7 zur Bereitstellung von sechs Vorwärtsgängen 1G - 6G und einem Rückwärtsgang RG. Ein Verbrennungsmotor VM, bzw. dessen Kurbelwelle, ist über ein als Motor- bzw. Anfahrkupplung ausgebildetes Anfahrelement K1 mit einer Getriebeeingangswelle W1, welche die Hybridantrieb-Struktur 1a durchsetzt, verbindbar. Axial dahinter ist eine Getriebeausgangswelle W2 angeordnet. Die erste Getriebeeingangswelle W1 ist eingangsseitig koaxial von einer als Hohlwelle ausgebildeten zweiten Getriebeeingangswelle W3 umgeben, auf der eine Elektromaschine EM 1 bzw. deren Rotor befestigt ist. Achsparallel dazu befindet sich eine Vorgelegewelle W4.

Die erste, getriebeeingangsseitige Radsatzebene Z1 ist durch ein mit der Hohlwelle W3 drehfest verbundenes Festrad z11 und ein mit diesem kämmenden, auf der Vorgelegewelle W4 drehbar angeordneten Losrad z21 gebildet. Das Losrad z21 ist über eine als eine unsynchronisierte Klauenkupplung ausgebildete doppelseitig betätigbare Gangschaltvorrichtung S4 in einer ersten Schaltstellung mit der Vorgelegewelle W4 drehfest verbindbar. Das Zahnradpaar z11/z21 der Radsatzebene Z1 ist für einen zweiten Gang 2G ausgelegt.

Die zweite Radsatzebene Z2 umfasst ein auf der Hohlwelle W3 angeordnetes Festrad z12 und ein auf der Vorgelegewelle W4 sitzendes Losrad z22, welches mit der vierten Schaltvorrichtung S4 in einer zweiten Schaltstellung mit der Vorgelegewelle W4 drehfest verbindbar ist. Das Zahnradpaar z12/z22 der Radsatzebene Z2 ist für einen vierten Gang 4G ausgelegt.

Die Getriebeeingangswelle W1 tritt in Höhe einer ersten auf ihr angeordneten doppelseitig betätigbaren Gangschaltvorrichtung S1, die als eine Synchronisierung aufweist, aus der Hohlwelle W3 heraus. Über die Schaltvorrichtung S1 ist die Hohlwelle W3 und damit die Elektromaschine EM1 in einer ersten Schaltstellung mit der Getriebeeingangswelle W1 antriebswirksam verbindbar.

Die dritte Radsatzebene Z3 ist als ein Rückwärtsgang RG ausgebildet. Sie umfasst ein auf der Getriebeeingangswelle W1 angeordnetes Losrad z13, welches mit der ersten Schaltvorrichtung S1 in einer zweiten Schaltstellung mit der Getriebeeingangswelle W1 drehfest verbindbar ist. Das Losrad z13 befindet sich im Eingriff mit einem drehbar gelagerten Zwischenrad zR3 zur Drehrichtungsumkehr, welches seinerseits mit einem auf der Vorgelegewelle W4 angeordneten zugehörigen Festrad z23 kämmt.

Die vierte Radsatzebene Z4 umfasst ein Losrad z14 der Getriebeeingangswelle W1, welches mittels einer zweiten, als doppelseitig betätigbare Synchronisierung ausgebildeten Gangschaltvorrichtung S2 mit der Getriebeeingangswelle W1 in einer ersten Schaltstellung drehfest verbindbar ist, und ein zugehöriges Festrad z24 der Vorgelegewelle W4. Diese Zahnradpaar z14/z24 bildet eine Übersetzung für einen ersten Gang 1G.

Die fünfte Radsatzebene Z5 ist durch ein mit der Schaltvorrichtung S2 in einer zweiten Schaltstellung mit der Getriebeeingangswelle W1 drehfest verbindbares Losrad z15 und ein mit diesem kämmenden Festrad z25 auf der Vorgelegewelle W4 gebildet. Das Zahnradpaar z15/z22 bildet eine Übersetzung für einen dritten Gang 3G.

Die sechste Radsatzebene Z6 umfasst ein Losrad z16 der Getriebeeingangswelle W1, welches mittels einer dritten, als doppelseitig betätigbaren Synchronisierung ausgebildeten Gangschaltvorrichtung S3 mit der Getriebeeingangswelle W1 in einer ersten Schaltstellung drehfest verbindbar ist, und ein zugehöriges Festrad z26 der Vorgelegewelle W4. Diese Zahnradpaar z16/z26 bildet eine Übersetzung für einen sechsten Gang 6G.

In einer zweiten Schaltstellung stellt die Schaltvorrichtung S3 eine Direktverbindung zwischen der Getriebeeingangswelle W1 und der Getriebeausgangswelle W2 her. Diese Direktverbindung stellt einen fünften Gang 5G als Direktgang dar.

Die siebte Radsatzebene Z7 ist als eine Abtriebskonstante ausgebildet. Sie umfasst ein mit der Getriebeausgangswelle W2 verbundenes Festrad z17, welches im Zahneingriff mit einem mit der Vorgelegewelle W4 verbundenen Festrad z27 ist.

Die Fig. 2 zeigt eine beispielhafte Gangtabelle der Hybridantrieb-Struktur 1a. Die Tabelle ist von links nach rechts für verbrennungsmotorische Gänge (Spalte 1, Gangfolge VM) und von rechts nach links für separate elektrische und elektrischverbrennungsmotorisch gekoppelte Gänge (Spalte 8, Gangfolge EM) zu lesen. Bei den verbrennungsmotorischen Gängen wirkt der Verbrennungsmotor VM über eine in der ersten Spalte hinter dem jeweiligen Gang eingetragene Radsatzebene Z1 - Z6 zum Abtrieb. In der zweiten Spalte ist beispielhaft eine Übersetzung i und in der dritten Spalte ein zugehöriger Stufensprung eingetragen, woraus sich in diesem Fall eine Gesamtspreizung i_ges=7,05 ergibt. Der fünfte Gang 5G weist als ein Direktgang die Übersetzung i=1 auf: Der sechste Gang 6G ist als ein Schellgang ausgelegt. Die Getriebestufung ist annähernd geometrisch mit konstanten Sprüngen ausgelegt, so dass sich die Differenz der Höchstgeschwindigkeiten zwischen den Gängen mit steigendem Gang vergrößert. In den Spalten S1 bis S4 ist die jeweilige Schaltstellung "li" = links bzw. "re" = rechts der Gangschalteinrichtungen S1, S2, S3, S4 angegeben, wobei jeweils zu berücksichtigen ist, ob der Verbrennungsmotor VM, die Elektromaschine EM1 oder beide zu schalten sind.

Die verbrennungsmotorische Gangfolge beginnt beim ersten Gang 1G, der über die Synchronisierung S2 das Zahnrad z14 der Radsatzebene Z4 mit der Getriebeeingangswelle W1 und damit nach Schließen der Anfahrkupplung K1 kraftschlüssig mit dem Verbrennungsmotor verbindet. Der Kraftfluss verläuft über die Vorgelegewelle W4 und die Abtriebskonstante Z7 zur Getriebeausgangswelle W2. Der erste Gang 1G ist ein rein verbrennungsmotorischer Gang.

Der zweite Gang 2G ist wahlweise ein rein elektrischer Gang oder ein gekoppelter Gang. Dementsprechend beginnt die elektromotorische Gangfolge beim zweiten elektrisch separaten Gang 2G, der dem die Klauenkupplung S4 das Zahnrad z21 der Radsatzebene Z1 mit der Vorgelegewelle W4 und damit mit der Elektromaschine EM1 verbindet. Der Kraftfluss verläuft wiederum wie bei allen Gängen außer dem Direktgang über die Vorgelegewelle W4 und die Abtriebskonstante Z7 zur Getriebeausgangswelle W2. Alternativ dazu ist der zweite Gang 2G von beiden Antriebsmaschinen VM, EM1 antreibbar. Dazu verbindet zusätzlich die Synchronisierung S1 die Getriebeeingangswelle W1 mit der Hohlwelle W3, so dass sich die beiden Antriebsmomente überlagernd addieren.

Es folgt der dritte Gang 3G als rein verbrennungsmotorischer Gang, der vierte Gang 4G als wahlweise elektrischer oder gekoppelter Gang, der fünfte Gang 5G (Direktgang) und der sechste Gang 6G als verbrennungsmotorische Gänge. Der Rückwärtsgang RG kann entweder über die Synchronisierung S1 verbrennungsmotorisch oder über die Klauenkupplung S4 und eine Drehrichtungsumkehr der Elektromaschine EM1 rein elektrisch geschaltet betrieben werden. Bei diesem Schaltschema sind somit der zweite Gang 2G und der vierte Gang 4G wahlweise mit Unterstützung des Elektroantriebs oder rein elektrisch betreibbar. Wahlweise ist elektrisches Rückwärtsfahren möglich. Da keine gekoppelten Gänge aufeinander folgen, ist durchgängig mit Hilfe einer geeigneten Ansteuerung eine Zugkraftunterstützung über die jeweils andere Antriebsquelle beim Gangwechsel möglich.

Im Folgenden werden jeweils die wesentlichen Unterschiede einzelner AMT-Hybrid-Varianten erläutert.

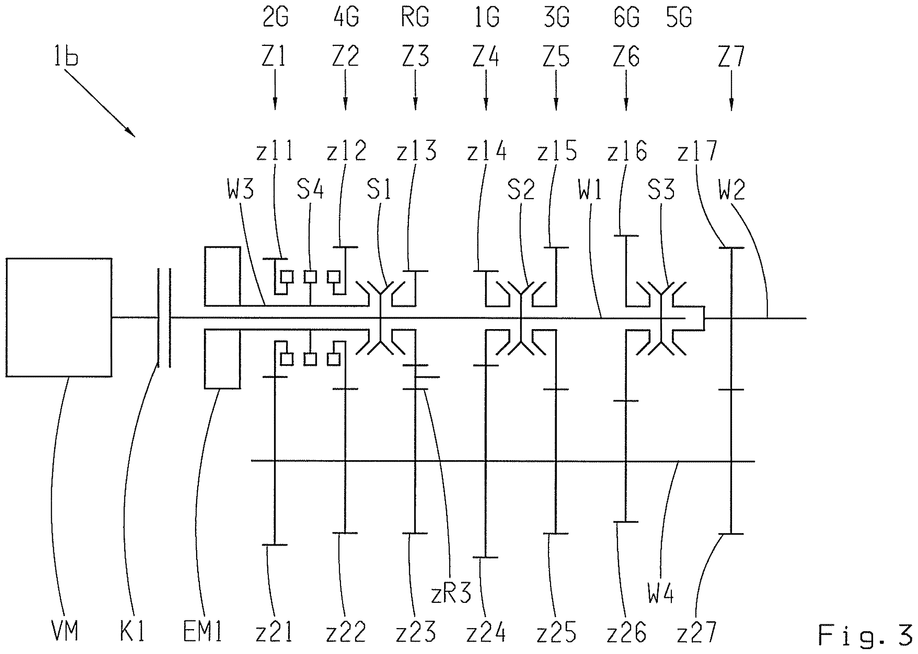

Die Fig. 3 zeigt eine mit Fig. 1 vergleichbare beispielhafte Hybridantrieb-Struktur 1b. Die Schaltvorrichtung S4 ist hier auf der Hohlwelle W3 anstatt auf der Vorgelegewelle W4 angeordnet. Alle Schaltelemente S1 - S4 befinden sich somit alle auf der An- und Abtriebsebene W1/W2/W3. Auf der Vorgelegewelle W4 sind nur Festräder z21, z22, z23, z24, z25, z26, z27 angeordnet.

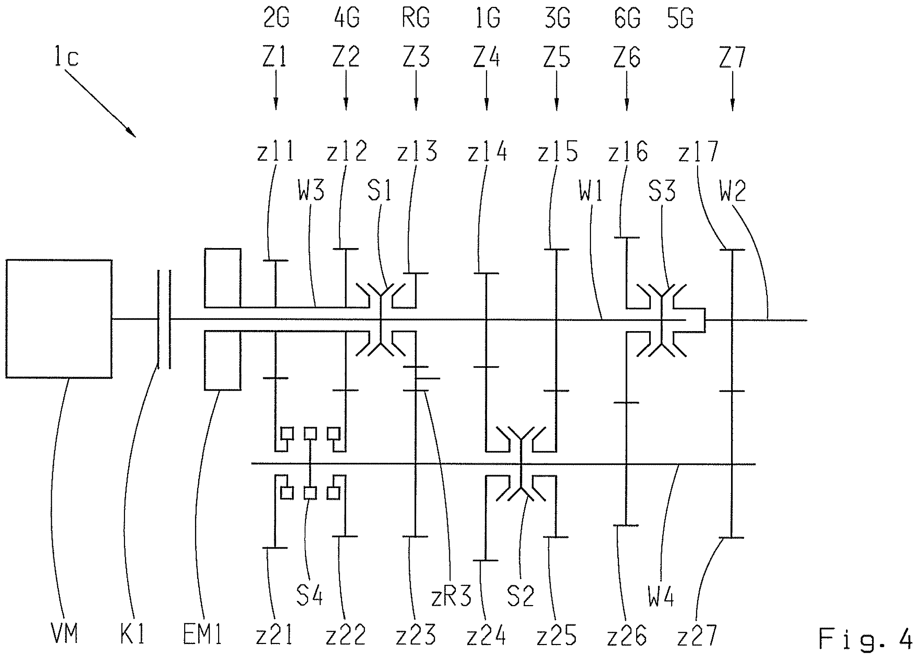

Fig. 4 zeigt eine vergleichbare beispielhafte Hybridantrieb-Struktur 1c, bei der jedoch jeweils zwei Schaltvorrichtungen S1 und S3 bzw. S2 und S4 auf der An- und Abtriebsebene W1/W2/W3 bzw. auf der der Vorgelegewelle W4 angeordnet sind. Die Schaltelemente S1 - S4 sind somit auf der An- und Abtriebsebene W1/W2/W3 und auf der Vorgelegewelle W4 gleichmäßig verteilt. Dabei ist auf der Vorgelegewelle W4 eine Klauenkupplung S4 und eine synchronisiertes Schaltelement S2 angeordnet, währen auf der Getriebeeingangswelle W1 zwei synchronisierte Schaltelemente S1 und S3 vorhanden sind. In einer weiteren von Fig. 4 ausgehenden, nicht abgebildeten Ausgestaltung, ist die Klauenkupplung S4 nicht auf der Vorgelegewelle W4 sondern auf der zweiten Getriebeeingangswelle W3 entsprechend Fig. 3 angeordnet.

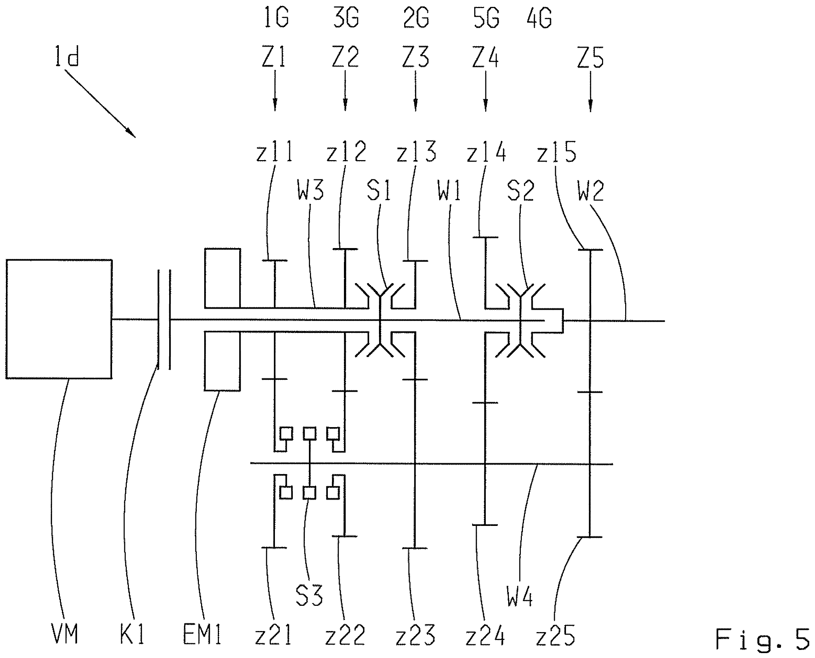

Fig. 5 zeigt eine beispielhafte Hybridantrieb-Struktur 1d mit fünf Vorwärtsgängen 1G - 5G und ohne Rückwärtsgang. Der vierte Gang 4G ist ein Direktgang, der durch ein Verbinden der Getriebeeingangswelle W1 mit der Antriebswelle W2 mittels des Schaltelements S2 geschaltet wird. Es sind vier Radsatzebenen Z1 - Z4 für Vorwärtsgänge und eine Abtriebskonstante Z5 angeordnet. Das Rückwärtsfahren ist nur elektrisch möglich (Plug-In-Hybrid). In einer weiteren von Fig. 5 ausgehenden, nicht abgebildeten Ausgestaltung, ist die Klauenkupplung S3 nicht auf der Vorgelegewelle W4 sondern auf der zweiten Getriebeeingangswelle W3 analog zu der Anordnung der Klauenkupplung S4 auf der Getriebeeingangswelle W3 aus Fig. 3 angeordnet.

Die Hybridantrieb-Strukturen 1a - 1d sind als Antriebsstränge mit koaxialem Antrieb und Abtrieb ausgebildet. Die nachfolgend beschriebenen Hybridantrieb-Strukturen 1e - 1k sind hingegen mit achsversetztem Abtrieb ausgebildet.

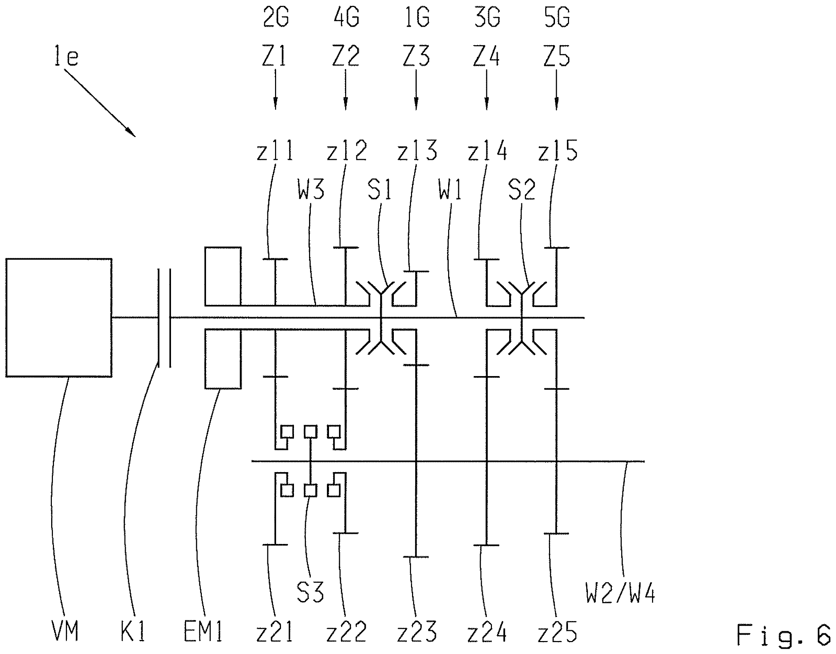

Fig. 6 zeigt demnach eine beispielhafte Hybridantrieb-Struktur 1e, bei der die Getriebeausgangswelle W2 als eine Vorgelegewelle W2/W4 ausgebildet ist. Die Hybridantrieb-Struktur 1e weist fünf Radsatzebenen Z1 - Z5 für fünf Vorwärtsgänge 1G - 5G auf. Ein separater Rückwärtsgang ist nicht vorgesehen. Elektrisches Rückwärtsfahren ist wiederum möglich. Auf der Getriebeeingangswelle W1 sind zwei synchronisierte Schaltelemente S1, S2 und auf der Vorgelegewelle W2/W4 ist eine Klauenkupplung S3 als Gangschaltelement angeordnet. In einer weiteren von Fig. 6 ausgehenden, nicht abgebildeten Ausgestaltung, ist die Klauenkupplung S3 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

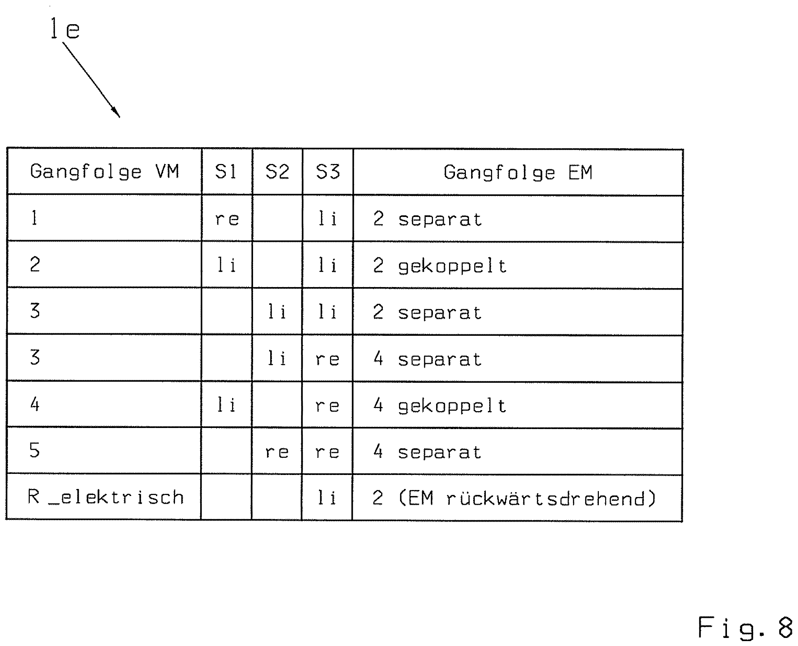

Eine Schalttopologie des Hybridantriebs gemäß Fig. 6 zeigt die Fig. 7. Darin ist zum einen die schaltbare Ankopplung der Elektromaschine EM1 über die Hohlwelle W3 und das zentrale Schaltelement S1 an den Antriebsstrang, zum anderen die Schaltung von zwei elektrischen Gängen - hier die Gänge 2G und 4G - über das Schaltelement S3 verdeutlicht. Der Abtrieb führt über die Ausgangswelle W2. Die Gänge 2G und 4G können somit rein elektrisch oder mittels des Schaltelementes S1 auch mit dem Verbrennungsmotor VM gekoppelt angetrieben werden. Der verbrennungsmotorische Zweig führt wiederum über das Schaltelement S1 zu den übrigen Gängen - hier die Gänge 1G, 3G und 5G zum Abtrieb W2. Das Aufbauprinzip ist sinngemäß auch auf die anderen Hybridantrieb-Strukturen 1a - 1k übertragbar. Dies wird auch bei einer vergleichenden Betrachtung der zugehörigen Gangtabelle der Hybridantrieb-Struktur 1e in Fig. 8 mit der Gangtabelle der Hybridantrieb-Struktur 1a in Fig. 2 deutlich. Die Gangtabelle in Fig. 8, deren Textinformationen ausdrücklich Inhalt der Beschreibung sind, verdeutlicht die beschriebene Gangfolge vor allem hinsichtlich der Schaltstellung der Schaltelemente S1, S2 und S3.

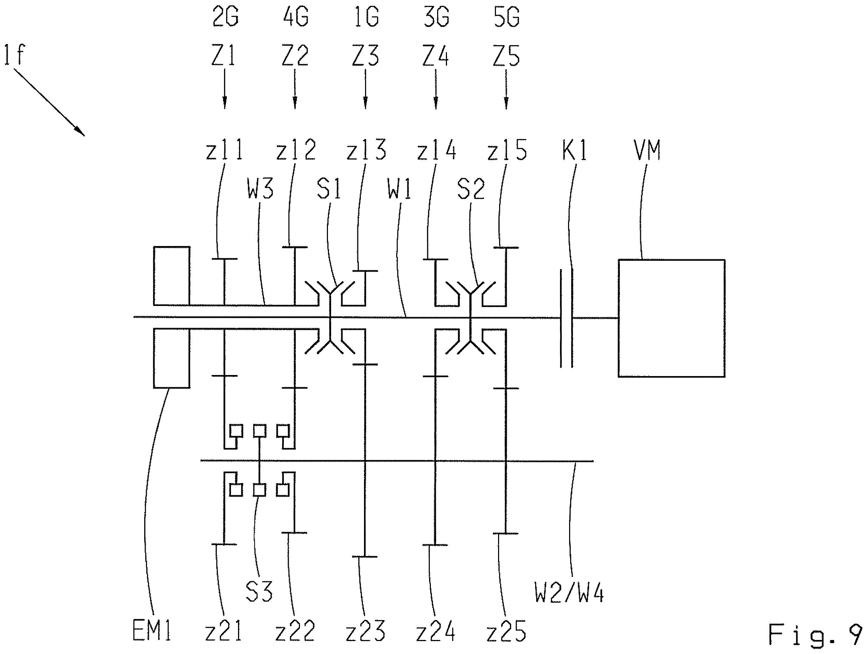

Eine in Fig. 9 gezeigte beispielhafte Hybridantrieb-Struktur 1f illustriert die Möglichkeit einer alternativen Anordnung der Hybrid-Antriebsquellen Verbrennungsmotor VM und Elektromaschine EM1 in einer Anordnung mit achsversetztem Abtrieb. Der Verbrennungsmotor VM und die zugehörige Anfahrkupplung K1 sind der Elektromaschine EM1 axial gegenüber angeordnet. Im Übrigen entspricht der Radsatz der Hybrid-antrieb-Struktur 1e von Fig. 6, auf deren Beschreibung verwiesen wird. In einer weiteren von Fig. 9 ausgehenden, nicht abgebildeten Ausgestaltung, ist die Klauenkupplung S3 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

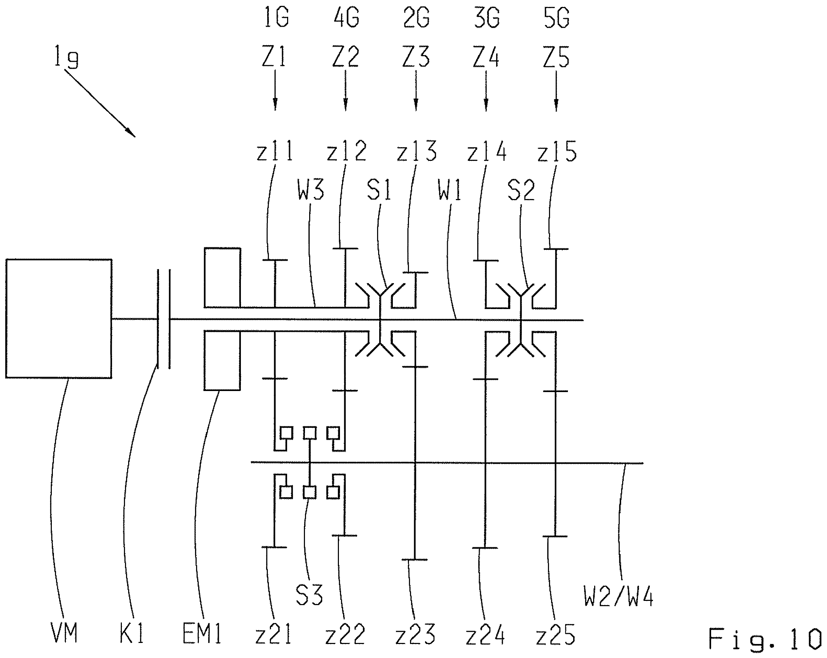

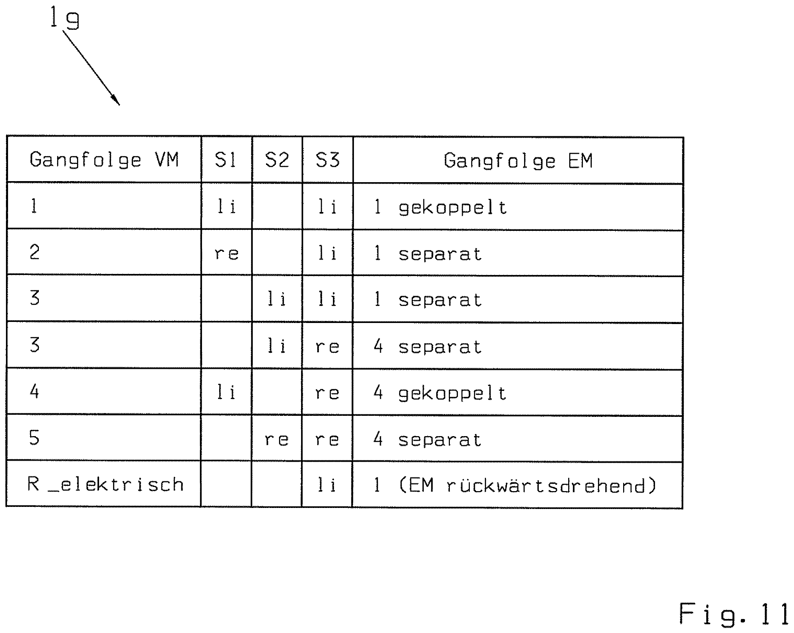

Fig. 10 zeigt eine beispielhafte Hybridantrieb-Struktur 1g, die mit der Hybridantrieb-Struktur 1e von Fig. 6 weitgehend baugleich ist, allerdings eine veränderte Gangfolge besitzt. Es ist lediglich die Anordnung des ersten Gangs 1G und des zweiten Gangs 2G vertauscht. Die Zahnräder des ersten Gangs 1G befinden sich bei der Hybridantrieb-Struktur 1g axial dicht an der Elektromaschine EM1. Dies wird durch das zugehörige Schaltschema in Fig. 11 im Vergleich zum Schaltschema in Fig. 8 ersichtlich und zeigt, dass die Gänge unter der Randbedingung, dass gekoppelte Gänge nicht nebeneinander liegen sollten, um eine vollwertige Zugkraftauffüllung beim Gangwechsel mittels des jeweils anderen Aggregates VM bzw. EM1 zu ermöglichen, auf die vorhandenen Zahnradpaare beliebig verteilbar sind. Bei der Hybridantrieb-Struktur 1g liegen die elektrischen bzw. gekoppelten Gänge sogar zwei Gangstufen auseinander. Auch bei der Fig. 8 gilt der Textbestandteil als Beschreibungsbestandteil. In einer weiteren von Fig. 10 ausgehenden, nicht abgebildeten Ausgestaltung, ist die Klauenkupplung S3 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

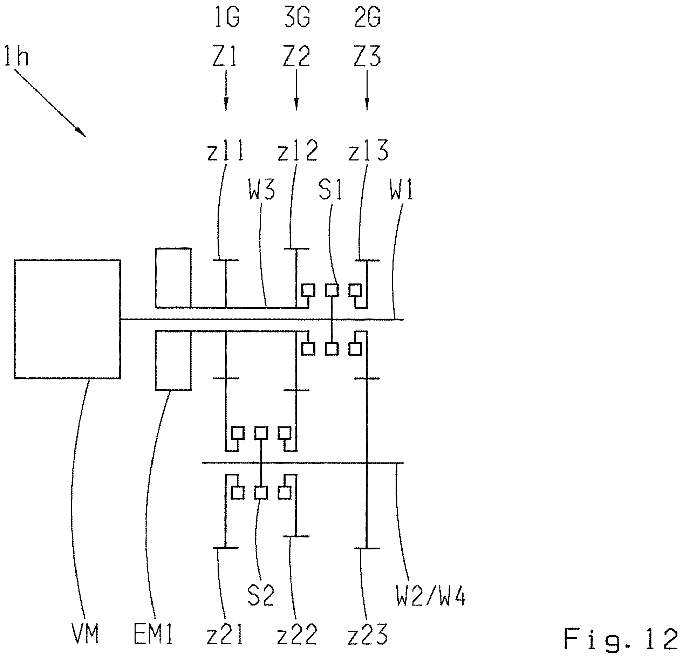

Fig. 12 zeigt eine beispielhafte Hybridantrieb-Struktur 1h, die als kompakt bauender "0K-ISG"- Hybrid ausgebildet ist. Ein Anfahrelement K1 zwischen dem Verbrennungsmotor VM und der Getriebeeingangswelle W1 entfällt. Der Verbrennungsmotor VM ist unmittelbar, d.h. nicht schaltbar mit der Getriebeeingangswelle W1 verbunden und dient als reiner mechanischer Rangeextender. Es sind lediglich drei Radsatzebenen Z1, Z2, Z3 für drei Vorwärtsgänge 1G, 2G, 3G angeordnet, die über zwei unsynchronisierte Klauenkupplungen S1, S2 geschaltet sind. Die Synchronisierung beim Gangwechsel erfolgt durch eine Drehzahlregulierung des Verbrennungsmotors VM. Die Elektromaschine EM1 startet den Verbrennungsmotor VM und fungiert als Anfahrelement sowohl für die Vorwärtsfahrt als auch für die Rückwärtsfahrt. Gegebenenfalls kann ein nicht dargestellter zusätzlicher Startergenerator vorgesehen sein, um den Verrennungsmotor VM auch zugkraftunterstützt starten zu können. In einer weiteren von Fig. 12 ausgehenden, nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

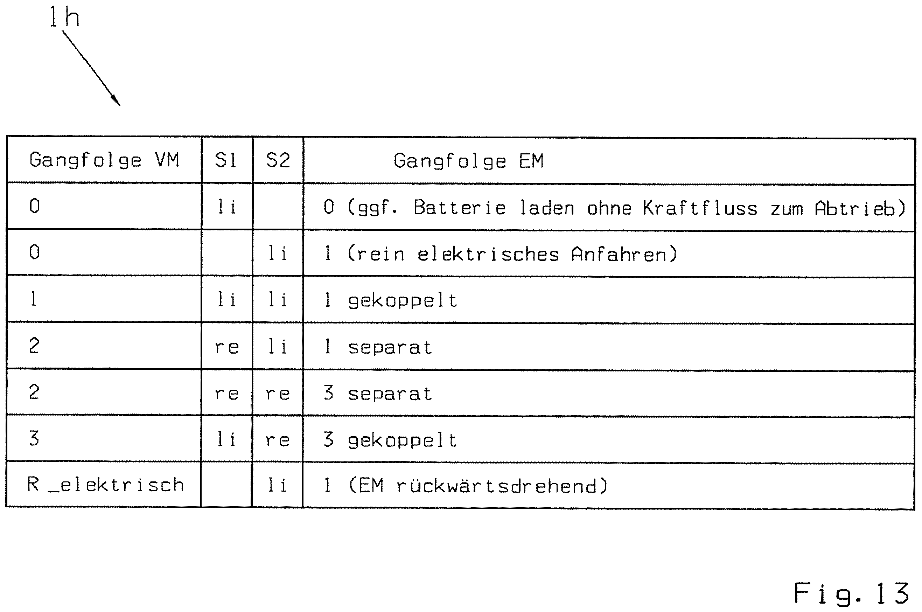

Fig. 13 zeigt eine beispielhafte Gangtabelle für die Hybridantrieb-Struktur 1h gemäß Fig. 12. Durch eine Verbindung der Elektromaschine EM1 mit dem Verbrennungsmotor VM über die Schaltstellung "li" der Schaltvorrichtung S1 kann die Elektromaschine EM1 ohne Kraftfluss zum Abtrieb W2 als Generator angetrieben werden, um einen Energiespeicher, insbesondere eine Fahrzeugbatterie, zu laden oder Verbraucher im Bordnetz zu versorgen. Durch Schalten des Schaltelementes S2=li ist ein rein elektrisches Anfahren im ersten Gang 1G möglich. Durch zusätzliches Zuschalten des Verbrennungsmotors VM durch die Schaltstellung S1=li wird ein gekoppelter erster Gang 1G geschaltet. Der zweite Gang 2G ist ein rein verbrennungsmotorischer Gang. Der dritte Gang 3G kann wiederum rein elektrisch oder gekoppelt verbrennungsmotorisch-elektrisch angetrieben sein. Der rein elektrische Anfahrgang 1G kann durch eine Drehrichtungsumkehr der Elektromaschine EM1 als Rückwärtsgang genutzt werden.

Drei weitere Hybridantrieb-Strukturen 1i, 1j und 1k zeigen einen AMT-Hybrid-Antrieb mit einem erweiterten Elektroantrieb. Darin ist zusätzlich eine zweite elektrische Maschine EM2 als ein Kurbelwellenstartergenerator (KSG) auf der Kurbelwelle des Verbrennungsmotors bzw. auf der mit der Kurbelwelle nicht schaltbar verbundenen Getriebeeingangswelle W1 angeordnet. Der Radsatz entspricht der in Fig. 12 gezeigten Hybridantrieb-Struktur 1h.

Die zweite Elektromaschine EM2 dient zum einen als ein Generator, zum anderen gegebenenfalls als Motor zum Starten des Verbrennungsmotors VM. Die zweite Elektromaschine EM2 ist vorzugsweise so ausgelegt, dass sie im Generatorbetrieb eine erforderliche mittlere elektrische Leistung zur Versorgung der ersten Elektromaschine EM1 als Traktionsmaschine für einen länger anhaltenden Stop-and-Go-Betrieb zuverlässig erzeugen kann. Dafür reicht in etwa eine um den Faktor 10 geringere Generatorleistung der EM2 im Vergleich zur Traktionsleistung der EM1 aus. Bei der in Fig. 14 gezeigten erfindungsgemäßen Hybridantrieb-Struktur 1i sind der Verbrennungsmotor VM, die zweite Elektromaschine EM2 und die erste Elektromaschine EM1 axial hintereinander angeordnet. In einer weiteren von Fig. 14 ausgehenden nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

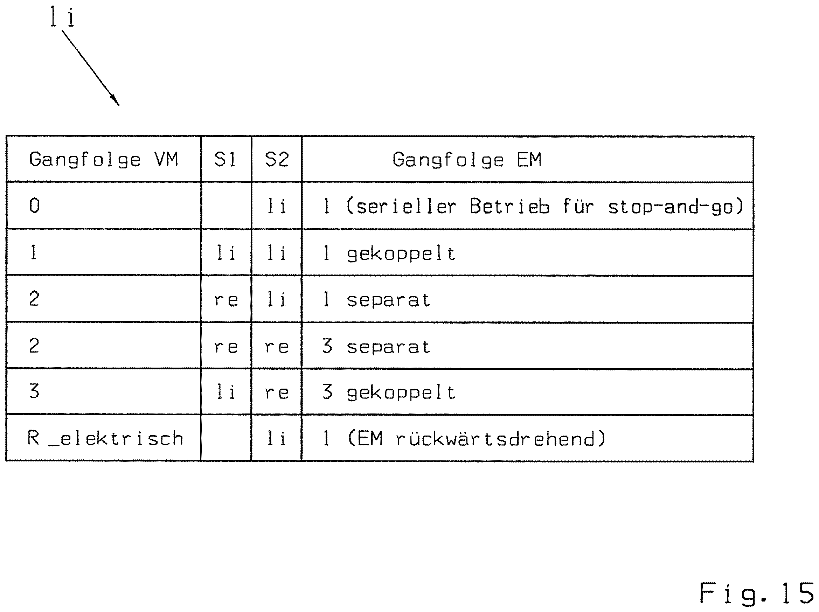

Fig. 15 zeigt eine zur Hybridantrieb-Struktur 1i zugehörige Gangtabelle. In einem ersten elektrischen Gang 1G, beispielsweise für den Stop-and-Go-Verkehr, wird die elektrische Traktionsmaschine EM1 durch den Generator EM2 mit Strom versorgt. Der Verbrennungsmotor VM treibt dazu den Generator EM2 ohne Kraftflussverbindung zum Abtrieb an, so dass der Antrieb in einem emissionsarmen Serienhybrid-Modus betrieben wird. Alternativ dazu kann der erste Gang 1G auch als ein aus einem Energiespeicher versorgter rein elektrischer Gang oder in einem Parallelhybridmodus als gekoppelter Gang, wie bereits oben beschrieben, angesteuert werden. Dazu wird die Getriebeeingangswelle W1 über das Schaltelement S1 mit der Hohlwelle W3 verbunden. Der folgende zweite Gang 2G ist ein verbrennungsmotorischer Gang, der dritte Gang wiederum rein elektrisch oder gekoppelt elektrischverbrennungsmoto-risch betriebener Gang. Der elektrische erste Gang 1G kann durch eine Drehrichtungsumkehr der Elektromaschine EM1 wiederum als ein Rückwärtsgang genutzt werden.

Bei der in Fig. 16 gezeigten erfindungsgemäßen Hybridantrieb-Struktur 1j ist die zweite Elektromaschine EM2 auf der axial gegenüberliegenden Getriebeseite angeordnet. Diese Anordnung stellt eine einfache modulare Erweiterung ohne konstruktive Änderungen der Hybridantrieb-Struktur 1h von Fig. 12 dar. Die ist sinnvoll nutzbar, wenn es die Bauraumerfordernisse in einem Kraftfahrzeug erfordern. In einer weiteren von Fig. 16 ausgehenden, nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

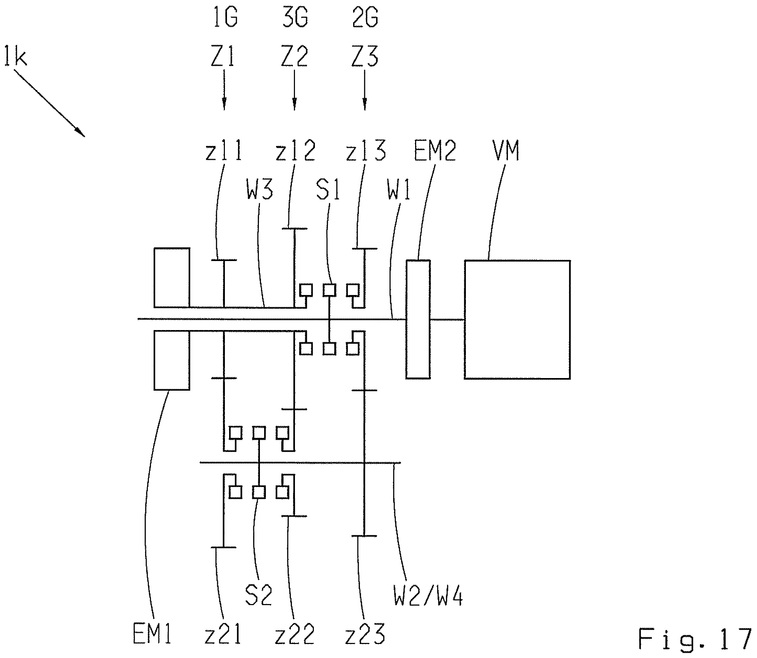

Außerdem sind bei der in Fig. 17 gezeigten beispielhaften Hybridantrieb-Struktur 1k die zweite Elektromaschine EM2 und der Verbrennungsmotor VM in vergleichbarer Weise zu der in Fig. 9 gezeigten Hybridantrieb-Struktur 1f auf der gegenüberliegenden Getriebeseite angeordnet. In einer weiteren von Fig. 17 ausgehenden, nicht abgebildeten Ausgestaltung, ist die Klauenkupplung S2 nicht auf der Vorgelegewelle W2/W4 sondern auf der zweiten Getriebeeingangswelle W3 analog zu der Anordnung der Klauenkupplung S4 auf der Getriebeeingangswelle W3 aus Fig. 3 angeordnet.

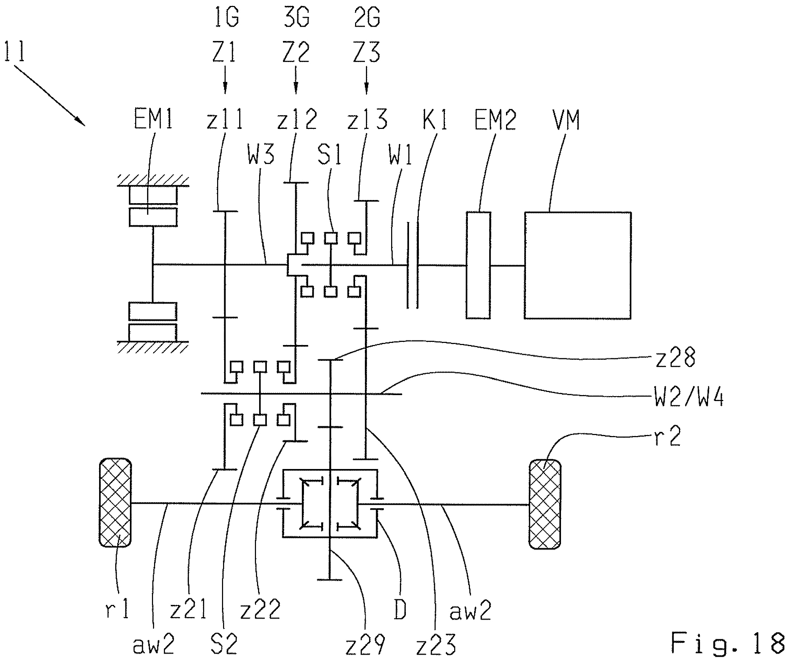

Schließlich zeigt Fig. 18 eine beispielhafte Hybridantrieb-Struktur 1l mit koaxial sowie axial benachbart angeordneten Getriebeeingangswellen W1, W3'. Die erste Getriebeeingangswelle W1 ist von einem Verbrennungsmotor VM sowie von einer zweiten Elektromaschine EM2 antreibbar, und die zweite Getriebeeingangswelle W3' ist mittels einer ersten Elektromaschine EM1 antreibbar. Außerdem ist an der ersten Getriebeeingangswelle W1 eine Anfahrkupplung K1 angeordnet. Weiterhin ist eine Gangschaltvorrichtung S1 axial zwischen den beiden Getriebeeingangswellen W1 und W3' angeordnet, welche diese beiden Wellen W1, W3' in der linken Schaltstellung gemäß Fig. 18 antriebswirksam miteinander koppeln kann. In einer mittleren Schaltstellung nimmt diese Gangschaltvorrichtung S1 ihre Neutralstellung ein, während sie in ihrer rechten Schaltstellung der zweite Gang 2G eingelegt ist.

Das automatisierte Schaltgetriebe gemäß Fig. 18 ist ansonsten weitgehend identisch aufgebaut wie die Getriebe gemäß den Ausführungsbeispielen der Figuren 12, 14, 16 und 17. Es verfügt daher über eine achsparallel zu den beiden Getriebeeingangswellen W1, W3' angeordnete kombinierte Vorgelege- und Abtriebswelle W2/W4, drei Radsatzebenen Z1, Z2, Z3 mit Los- und Festrädern für drei Vorwärtsgänge 1G, 2G, 3G und einen elektromotorisch realisierbaren Rückwärtsgang. Dabei können der erste Gang 1G und der dritte Gang 3G rein elektromotorisch angetrieben werden, während alle drei Vorwärtsgänge 1G, 2G, 3G verbrennungsnotorisch antreibbar sind. Zum Schalten der Gänge ist auf der Vorgelegewelle W2/W4 eine ebenso als Klauenkupplung ausgebildete zweite Gangschaltvorrichtung S2 angeordnet. Weiter zeigt Fig. 18, dass auf der Vorgelegewelle W2/W4 ein Abtriebszahnrad z28 befestigt ist, welches mit einer Antriebsverzahnung z29 am Gehäuse eines Differentialgetriebes D kämmt. Von diesem Differentialgetriebe D gehen in bekannter Weise zwei Antriebswellen aw1, aw2 für zwei Räder r1, r2 eines Kraftfahrzeugs ab.

Die Anfahrkupplung K1 kann bei der Hybridantrieb-Struktur 1l der Fig. 18 Kosten und Bauraum sparend entfallen, sofern anstelle dieser Anfahrkupplung K1 eine zweite Elektromaschine EM2 so angeordnet ist, dass diese die erste Getriebeeingangswelle W1 antreiben kann, beispielsweise zum Synchronisieren des zweiten Gangs 2G. Alternativ dazu kann beim Vorhandensein der Anfahrkupplung K1 an der ersten Getriebeeingangswelle W1 auf die zweite Elektromaschine EM2 Kosten und Bauraum sparend verzichtet werden, da die Synchronisierung des zweiten Gangs 2G mittels des Verbrennungsmotors VM und einer schlupfenden Anfahrkupplung K1 erfolgen kann.

### Bezugszeichenliste

- 1a - 1l: Hybridantrieb-Strukturen
- 1G - 6G: Vorwärtsgang
- aw1, aw2: Antriebswelle
- EM1: Elektromaschine
- EM2: Elektromaschine
- D: Differentialgetriebe
- i: Übersetzung
- i_ges: Getriebespreizung
- K1: Anfahrelement, Anfahrkupplung, Motorkupplung
- RG: Rückwärtsgang
- r1, r2: Fahrzeugrad
- S1 - S4: Gangschaltvorrichtung
- VM: Verbrennungsmotor
- W1: Erste Getriebeeingangswelle
- W2: Getriebeausgangswelle, Getriebeabtrieb
- W3: Zweite Getriebeeingangswelle, Hohlwelle
- W3': Zweite Getriebeeingangswelle
- W4: Vorgelegewelle
- Z1 - Z7: Radsatzebene
- z11 - z17: Zahnrad
- z21 -z29: Zahnrad
- zR3: Zahnrad

## Patentansprüche

1. Hybridantrieb mit einem automatisierten Schaltgetriebe, beispielsweise für ein Kraftfahrzeug, mit einem Verbrennungsmotor (VM), der mit wenigstens einer ersten Getriebeeingangswelle (W1) triebverbunden ist, mit einem Elektroantrieb, der wenigstens eine erste Elektromaschine (EM1) aufweist, die mit einer zweiten Getriebeeingangswelle (W3) triebverbunden ist, mit wenigstens einer Vorgelegewelle (W4), mit in mehreren Radsatzebenen (Z1 - Z7) angeordneten Losrädern und Festrädern (z11 - z17, z21 - z29, zR3), mit mehreren Gangschaltvorrichtungen (S1 - S4), und mit einer Getriebeausgangswelle (W2), wobei die beiden Getriebeeingangswellen (W1, W3) koaxial zueinander angeordnet sind, wobei auf der zweiten Getriebeeingangswelle (W3) der Rotor der ersten Elektromaschine (EM 1) befestigt ist, wobei eine erste Gangschaltvorrichtung (S1) der Gangschaltvorrichtungen (S1-S4) in einer ihrer Schaltstellungen die beiden Getriebeeingangswellen (W1, W3) antriebswirksam miteinander verbindet, und in einer anderen Schaltstellung einen Gang schaltet, und wobei zumindest eine Gangschaltvorrichtung als eine Klauenkupplung ausgebildet ist, **dadurch gekennzeichnet, dass** an der ersten Getriebeeingangswelle (W1) eine zweite Elektromaschine (EM2) angeordnet ist,
dass die erste Getriebeeingangswelle (W1) eingangsseitig, das heißt auf der Seite des Verbrennungsmotors (VM), koaxial von der als Hohlwelle ausgebildeten zweiten Getriebeeingangswelle (W3) umgeben ist, und
dass die erste und/oder die zweite Elektromaschine als ein Synchronisierungsmittel zur Synchronisation von Wellendrehzahlen ansteuerbar ist.

2. Hybridantrieb nach Anspruch 1, wobei die erste Gangschaltvorrichtung (S1) an einem axialen Ende der zweiten Getriebeeingangswelle angeordnet ist.

3. Hybridantrieb nach Anspruch 1 oder 2, wobei die zweite Elektromaschine (EM2) an der ersten Getriebeeingangswelle (W1) zwischen dem Verbrennungsmotor (VM) und der ersten Gangschaltvorrichtung (S1) oder auf der axial gegenüberliegenden Getriebeseite angeordnet ist.

4. Hybridantrieb nach einem der Ansprüche 1 bis 3, wobei die erste Elektromaschine (EM1) oder die zweite Elektromaschine (EM2) als ein integrierter Startergenerator zum Starten des Verbrennungsmotors (VM) und/oder als ein Generator zum Laden eines Energiespeichers oder zur Versorgung eines Bordnetzes ansteuerbar ist.

5. Hybridantrieb nach einem der vorangegangenen Ansprüche, wobei auf der der als Hohlwelle ausgebildeten zweiten Getriebeeingangswelle (W3) jeweils ein Festrad oder ein Losrad (z11, z12, z21, z22) einer ersten und einer zweiten Radsatzebene (Z1, Z2) angeordnet ist.

6. Hybridantrieb nach einem der vorangegangenen Ansprüche, wobei die Vorgelegewelle (W4) oder die mit dieser verbundenen Getriebeausgangswelle (W2) einen zur ersten Getriebeeingangswelle (W1) achsversetzten Getriebeabtrieb bildet.

7. Hybridantrieb nach einem der vorangegangenen Ansprüche, wobei der Verbrennungsmotor (VM) unmittelbar mit der ersten Getriebeeingangswelle (W1) wirkverbunden ist, und dass die erste Elektromaschine (EM1) als ein Anfahrelement ansteuerbar ist.

8. Hybridantrieb nach einem der vorangegangenen Ansprüche, wobei ein Rückwärtsgang mit einer Radsatzebene (Z1) eines Vorwärtsganges (1G, 2G) durch eine Drehrichtungsumkehr der ersten Elektromaschine (EM1) realisierbar ist.

9. Hybridantrieb nach einem der vorangegangenen Ansprüche, wobei der achsversetzte Getriebeabtrieb (W2) wahlweise auf der Seite der ersten Elektromaschine (EM1) oder auf der der ersten Elektromaschine (EM1) gegenüberliegenden Seite angeordnet ist.

10. Hybridantrieb nach einem vorangegangenen Ansprüche, wobei die Losräder und Festräder in genau drei Radsatzebenen (Z1 - Z3) angeordnet sind.

## Claims

1. Hybrid drive with an automated transmission, for example for a motor vehicle, with an internal combustion engine (VM) which is drive-connected to at least one first transmission input shaft (W1), with an electric drive which has at least one first electric machine (EM1) which is drive-connected to a second transmission input shaft (W3), with at least one countershaft (W4) with movable gears and fixed gears (z11-z17, z21-z29, zR3) which are arranged in a plurality of gear set planes (Z1-Z7), with a plurality of gear shifting apparatuses (S1-S4), and with a transmission output shaft (W2), the two transmission input shafts (W1, W3) being arranged coaxially with respect to one another, the rotor of the first electric machine (EM1) being fastened on the second transmission input shaft (W3), a first gear shifting apparatus (S1) of the gear shifting apparatuses (S1-S4) connecting the two transmission input shafts (W1, W3) to one another in drive terms in one of its shifting positions, and selecting a gear in another shifting position, and at least one gear shifting apparatus being configured as a claw coupling, **characterized in that** a second electric machine (EM2) is arranged on the first transmission input shaft (W1), **in that** the first transmission input shaft (W1) is surrounded on the input side (that is to say on the side of the internal combustion engine (VM)) coaxially by the second transmission input shaft (W3) which is configured as a hollow shaft, and **in that** the first and/or the second electric machine can be actuated as a synchronizing means for synchronizing shaft rotational speeds.

2. Hybrid drive according to Claim 1, the first gear shifting apparatus (S1) being arranged at one axial end of the second transmission input shaft.

3. Hybrid drive according to Claim 1 or 2, the second electric machine (EM2) being arranged on the first transmission input shaft (W1) between the internal combustion engine (VM) and the first gear shifting apparatus (S1) or on the axially opposite transmission side.

4. Hybrid drive according to one of Claims 1 to 3, the first electric machine (EM1) or the second electric machine (EM2) being actuable as an integrated starter generator for starting the internal combustion engine (VM) and/or as a generator for charging an energy store of for supplying an on-board electrical system.

5. Hybrid drive according to one of the preceding claims, in each case one fixed gear or one movable gear (z11, z12, z21, z22) of a first and a second gear set plane (Z1, Z2) being arranged on the second transmission input shaft (W3) which is configured as a hollow shaft.

6. Hybrid drive according to one of the preceding claims, the countershaft (W4) or the transmission output shaft (W2) which is connected to it forming a transmission output which is offset axially with respect to the first transmission input shaft (W1).

7. Hybrid drive according to one of the preceding claims, the internal combustion engine (VM) being operatively connected directly to the first transmission input shaft (W1), and the first electric machine (EM1) being actuable as a starting element.

8. Hybrid drive according to one of the preceding claims, it being possible for a reverse gear to be realised by way of a gear set plane (Z1) of a forward gear (1G, 2G) by way of a rotational direction reversal of the first electric machine (EM1).

9. Hybrid drive according to one of the preceding claims, the axially offset transmission output (W2) being arranged optionally on the side of the first electric machine (EM1) or on the side which lies opposite the first electric machine (EM1).

10. Hybrid drive according to one of the preceding claims, the movable gears and fixed gears being arranged in precisely three gear set planes (Z1-Z3).

## Revendications

1. Entraînement hybride doté d'une boîte de vitesses automatisée, par exemple pour un véhicule automobile, comprenant un moteur à combustion interne (VM) qui est en liaison d'entraînement avec au moins un premier arbre d'entrée de boîte de vitesses (W1), comprenant un entraînement électrique qui présente au moins une première machine électrique (EM1) qui est en liaison d'entraînement avec un deuxième arbre d'entrée de boîte de vitesses (W3), comprenant au moins un arbre intermédiaire (W4) avec des pignons fous et des pignons fixes (z11 à z17, z21 à z29, zR3) disposés dans plusieurs plans de jeux de pignons (Z1 à Z7), comprenant plusieurs dispositifs de changement de vitesse (S1 à S4), et comprenant un arbre de sortie de boîte de vitesses (W2), dans lequel les deux arbres d'entrée de boîte de vitesse (W1, W3) sont disposés coaxialement l'un par rapport à l'autre, dans lequel le rotor de la première machine électrique (EM1) est fixé sur le deuxième arbre d'entrée de boîte de vitesses (W3), dans lequel un premier dispositif de changement de vitesse (S1) des dispositifs de changement de vitesse (S1 à S4) relie dans l'une de ses positions de changement de vitesse les deux arbres d'entrée de boîte de vitesse (W1, W3) l'un à l'autre par entraînement, et change de vitesse dans une autre position de changement de vitesse, et dans lequel au moins un dispositif de changement de vitesse est réalisé sous la forme d'un accouplement à griffes,
**caractérisé en ce qu'**une deuxième machine électrique (EM2) est disposée sur le premier arbre d'entrée de boîte de vitesses (W1), **en ce que** le premier arbre d'entrée de boîte de vitesses (W1) est entouré du côté entrée, c'est-à-dire du côté du moteur à combustion interne (VM), coaxialement par le deuxième arbre d'entrée de boîte de vitesses (W3) réalisé sous forme d'arbre creux, et **en ce que** la première et/ou la deuxième machine électrique peuvent être pilotées comme un moyen de synchronisation pour synchroniser des vitesses de rotation d'arbre.

2. Entraînement hybride selon la revendication 1, dans lequel le premier dispositif de changement de vitesse (S1) est disposé à une extrémité axiale du deuxième arbre d'entrée de boîte de vitesses.

3. Entraînement hybride selon la revendication 1 ou 2, dans lequel la deuxième machine électrique (EM2) est disposée sur le premier arbre d'entrée de boîte de vitesses (W1) entre le moteur à combustion interne (VM) et le premier dispositif de changement de vitesse (S1) ou sur le côté de boîte de vitesses axialement opposé.

4. Entraînement hybride selon l'une quelconque des revendications 1 à 3, dans lequel la première machine électrique (EM1) ou la deuxième machine électrique (EM2) peut être pilotée comme un générateur de démarrage intégré pour démarrer le moteur à combustion interne (VM) et/ou comme un générateur pour charger un accumulateur d'énergie ou pour alimenter un réseau de bord.

5. Entraînement hybride selon l'une quelconque des revendications précédentes, dans lequel respectivement un pignon fixe ou un pignon fou (z11, z12, z21, z22) d'un premier et d'un deuxième plan de jeux de pignons (Z1, Z2) est disposé sur le deuxième arbre d'entrée de boîte de vitesses (W3) réalisé sous forme d'arbre creux.

6. Entraînement hybride selon l'une quelconque des revendications précédentes, dans lequel l'arbre intermédiaire (W4) ou l'arbre de sortie de boîte de vitesses (W2) relié à celui-ci constitue une sortie de boîte de vitesses d'axe décalé par rapport au premier arbre d'entrée de boîte de vitesses (W1).

7. Entraînement hybride selon l'une quelconque des revendications précédentes, dans lequel le moteur à combustion interne (VM) est en relation fonctionnelle directe avec le premier arbre d'entrée de boîte de vitesses (W1), et en ce que la première machine électrique (EM1) peut être pilotée comme un élément de démarrage.

8. Entraînement hybride selon l'une quelconque des revendications précédentes, dans lequel un rapport de marche arrière peut être réalisé par un plan de jeux de pignons (Z1) d'un rapport de marche avant (1G, 2G) par une inversion du sens de rotation de la première machine électrique (EM1).

9. Entraînement hybride selon l'une quelconque des revendications précédentes, dans lequel la sortie de boîte de vitesses (W2) d'axe décalé est disposée au choix sur le côté de la première machine électrique (EM1) ou sur le côté opposé à la première machine électrique (EM1).

10. Entraînement hybride selon l'une quelconque des revendications précédentes, dans lequel les pignons fous et les pignons fixes sont disposés dans exactement trois plans de jeux de pignons (Z1 à Z3).
